# EUROPÄISCHE PATENTANMELDUNG

(11) **EP 1 174 821 A1**
(43) Veröffentlichungstag der Anmeldung: **23.01.2002**
(21) Anmeldenummer: 00810647.8
(22) Anmeldetag: 20.07.2000
(51) Int. Cl.: G06K 19/077

(54) **Transponder mit Versteifungselement**

(71) Anmelder: SOKYMAT S.A., 1614 Granges (Veveyse) (CH)
(72) Erfinder: Miehling, Martin, 1614 Granges (Vevey) (CH)
(74) Vertreter: Wagner, Wolfgang, Dr. Phil., Dipl.-Phys.

(57) **Zusammenfassung**

Bei einem flexiblen Transponder z. B. im Kreditkartenformat ist ein auf einer Grundplatte (1) angeordneter integrierter Schaltkreis (4) zum Schutz vor zu hohen Biegelasten von einem rahmenförmigen Versteifungselement (5) mit geringem Abstand umgeben. Zur Verstärkung der mechanischen Kopplung zwischen diesen Teilen ist der Zwischenraum zwischen ihnen mit Kleber (9) ausgefüllt. Ein ebenfalls auf der Grundplatte (1) angeordneter Antennenschaltkreis (3) ist mit dem integrierten Schaltkreis (4) direkt elektrisch leitend verbunden.

## Beschreibung

### Technisches Gebiet

Die Erfindung betrifft einen Transponder gemäss dem Oberbegriff des Anspruchs 1. Transponder dieser Art werden zur Identifikation von Gegenständen verschiedener Art, aber auch von Personen und Tieren eingesetzt.

### Stand der Technik

Transponder umfassen stets neben einem Antennenschaltkreis einen mit demselben verbundenen integrierten Schaltkreis, der in der Regel als rechteckiges Plättchen ausgebildet ist, das im wesentlichen aus Silizium besteht. Werden diese Bauteile in einen flexiblen Träger z. B. im Format einer Kreditkarte eingebaut, so besteht vor allem bei etwas grösseren Abmessungen des integrierten Schaltkreises die Gefahr, dass derselbe zu hohen Biegelasten ausgesetzt wird, was dann zu Sprüngen im Silizium und damit zur Zerstörung des integrierten Schaltkreises und zum Ausfall des Transponders führt.

Es sind gattungsgemässe Transponder bekannt, bei denen zur Vermeidung einer mechanischen Ueberlastung des integrierten Schaltkreises derselbe in einen festen Modul integriert ist. Das Modul wird hergestellt, indem der integrierte Schaltkreis auf eine Substratplatte aufgesetzt und dann z. B. durch Umspritzen mit einer festen Schutzhülle umgeben wird. Diese Lösung hat den Nachteil, dass das Modul verhältnismässig dick ist. Ausserdem ist der Transponder aufwendig in der Herstellung, zumal die elektrischen Verbindungen zum Antennenschaltkreis über in die Substratplatte integrierte Leitungen hergestellt werden müssen, so dass für jede Verbindung zwei Kontakte herzustellen sind.

Eine andere Möglichkeit besteht darin, dass auf den integrierten Schaltkreis Vergussmasse, z. B. ein Epoxidharz aufgebracht wird, die dann denselben umhüllt und vor mechanischer Beanspruchung schützt. Die Resultate sind jedoch sehr stark von verschiedenen Parametern - Temperatur, Luftfeuchtigkeit, Druck in der Vergusseinrichtung - abhängig, so dass beträchtliche Schwankungen z. B. in der Dicke der Schutzschicht in Kauf genommen werden müssen. Ausserdem benötigt die Vergussmasse einige Zeit zum Aushärten.

Es ist auch möglich, die Dicke des integrierten Schaltkreises durch Schleifen oder Aetzen so weit zu verringern, dass derselbe ebenso flexibel ist wie der Träger, in den er integriert werden soll. Diese Präparation der integrierten Schaltkreise erfordert jedoch ebenfalls beträchtlichen Aufwand. Ausserdem ist ihre Handhabung im weiteren Herstellungsprozess ziemlich schwierig.

### Darstellung der Erfindung

Der Erfindung liegt die Aufgabe zu Grunde, einen gattungsgemässen Transponder so auszubilden, dass der integrierte Schaltkreis vor Biegelasten zuverlässig geschützt ist, der Transponder dort aber gleichwohl nicht übermässig verdickt ist. Ausserdem soll seine Herstellung durch den Schutz des integrierten Schaltkreises nicht wesentlich kompliziert werden.

Diese Aufgabe wird durch die Merkmale im Kennzeichen des Anspruchs 1 gelöst. Beim erfindungsgemässen Transponder ist der integrierte Schaltkreis vor mechanischer Ueberlastung gesichert. Gleichwohl kann die Dicke praktisch ebenso gering gehalten werden wie wenn auf einen Schutz verzichtet wird. Auch der Herstellungsaufwand wird kaum vergrössert.

### Kurze Beschreibung der Zeichnungen

Im folgenden wird die Erfindung anhand von Figuren, welche lediglich ein Ausführungsbeispiel darstellen, näher erläutert. Es zeigen
- Fig. 1a: eine Draufsicht auf einen erfindungsgemässen Transponder gemäss einer ersten Ausführungsform,
- Fig. 1b: einen Schnitt längs B-B in Fig. 1a,
- Fig. 2a: eine Draufsicht auf einen erfindungsgemässen Transponder gemäss einer zweiten Ausführungsform,
- Fig. 2b: einen Schnitt längs B-B in Fig. 2a,
- Fig. 3: eine teilweise Draufsicht auf einen erfindungsgemässen Transponder gemäss einer dritten Ausführungsform,
- Fig. 4: eine teilweise Draufsicht auf einen erfindungsgemässen Transponder gemäss einer vierten Ausführungsform und
- Fig. 5: eine teilweise Draufsicht auf einen erfindungsgemässen Transponder gemäss einer fünften Ausführungsform.

### Wege zur Ausführung der Erfindung

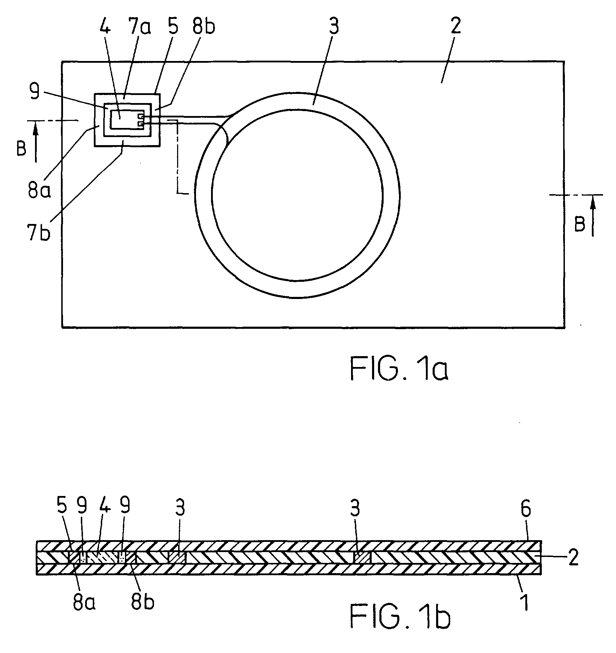

Gemäss einer ersten Ausführungsform (Fig. 1a,b) hat der Transponder die Form einer flexiblen Kreditkarte. Auf einer Grundplatte 1 liegt eine Mittelplatte 2 auf, welche Ausstanzungen zur Aufnahme eines Antennenschaltkreises 3 sowie eines integrierten Schaltkreises 4 und eines Versteifungselements 5 aufweist. Eine der Grundplatte 1 entsprechende Deckplatte 6 bildet eine durchgehende Deckschicht (in Fig. 1a weggelassen). Die Grundplatte 1, die Mittelplatte 2 und die Deckplatte 6 bestehen vorzugsweise aus PVC.

Das Versteifungselement 5 besteht aus vorzugsweise faserverstärktem Kunststoff oder aus Keramik und kann durch Spritzguss bzw. Sintern, Fräsen, Stanzen o. ä. hergestellt sein. Es ist einstückig und rahmenartig ausgebildet mit zwei parallelen Längsstäben 7a,b und Querstäben 8a,b rechteckigen Querschnitts und umgibt den integrierten Schaltkreis mit einem Abstand, der so gewählt ist, dass die Anforderungen an die Herstellungstoleranzen leicht erfüllbar sind. Seine Dicke entspricht der des integrierten Schaltkreises 4. Der Zwischenraum zwischen dem Versteifungselement 5 und dem integrierten Schaltkreis 4 ist mit einer Vergussmasse gefüllt, vorzugsweise einem Kleber 9. Der Antennenschaltkreis 3 ist als Spule ausgebildet, deren Enden mit den Kontaktflächen des integrierten Schaltkreises 4 direkt verbunden sind. Er könnte auch als Kondensator ausgebildet sein.

Zur Herstellung des Transponders wird die Mittelplatte 2 auf die Grundplatte 1 gesetzt und die Anschlüsse des Antennenschaltkreises 3 - die Enden der Spule - mit den Kontaktflächen des integrierten Schaltkreises verbunden.

Dies kann durch ein bekanntes Verfahren wie Laserschweissen, Thermokompressionsschweissen, Löten o. ä. geschehen. Dann werden der Antennenschaltkreis 3 sowie das Versteifungselement 5 und der integrierte Schaltkreis 4 in die vorgesehenen Ausstanzungen gelegt, die letztgenannten Teile mit dem Kleber 9 vergossen und die Deckplatte 6 aufgesetzt. Schliesslich werden die Grundplatte 1, die Mittelplatte 2 und die Deckplatte 6 durch Heissverpressen laminiert.

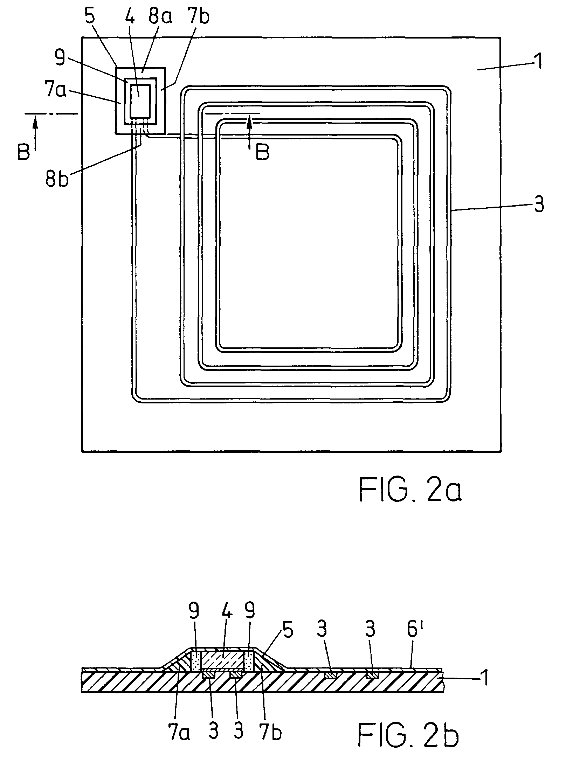

Gemäss einer zweiten Ausführungsform (Fig. 2a,b) weist der Transponder die Form eines flexiblen Etiketts auf, das zu ihrer Kennzeichnung auf Gegenstände aufgebracht, z. B. geklebt werden kann. Er weist ebenfalls eine Grundplatte 1 aus PVC auf, in welcher ein wiederum als Spule ausgebildeter Antennenschaltkreis 3 bereits integriert ist und der einen integrierten Schaltkreis 4, welcher von einem Versteifungselement 5 umgeben ist, trägt. Ueber diesen Bauteilen liegt eine Deckfolie 6', die eine in ihrer Ausdehnung der Grundplatte 1 entsprechende Deckschicht bildet.

Der integrierte Schaltkreis 4 ist hier über den Enden der den Antennenschaltkreis 3 bildenden Spule angebracht, mit welchen seine nach unten weisenden Kontaktflächen wiederum direkt verbunden sind. Das Versteifungselement 5 umgibt den integrierten Schaltkreis 4 wiederum mit etwas Abstand und der Zwischenraum ist wiederum mit Kleber 9 als Vergussmasse aufgefüllt. Es ist wiederum rahmenartig ausgebildet mit zwei parallelen Längsstäben 7a,b und Querstäben 8a,b, deren Querschnitt in jedoch zur Vermeidung scharfer Kanten dreieckig ist, d. h. ihre Dicke nimmt vom Aussenrand her mit abnehmender Entfernung vom integrierten Schaltkreis 4 zu, bis sie am Innenrand etwa dessen Dicke entspricht.

Zur Herstellung des Transponders wird die Grundplatte 1 mit einer dünnen Schicht Klebstoff bedeckt, dann der integrierte Schaltkreis 4 aufgesetzt und seine Kontaktflächen mit den Anschlüssen des Antennenschaltkreises 3 verbunden, was wiederum wie im Zusammenhang mit der ersten Ausführungsform geschildert geschehen kann. Anschliessend wird das Versteifungselement 5 auf die Grundplatte 1 gesetzt und der Kleber 9 appliziert. Schliesslich wird die Deckfolie 6' angebracht.

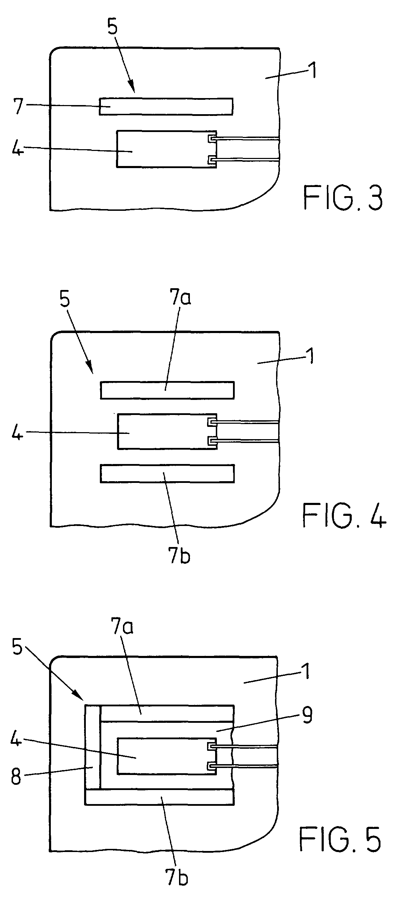

Es gibt zahlreiche Möglichkeiten, die Erfindung auszuführen. So kann das Versteifungselement 5 sehr verschieden ausgebildet sein. Fig. 3-5 zeigen einige Beispiele für die mögliche Ausbildung des Versteifungselements 5 und seine Anordnung neben dem integrierten Schaltkreis 4 auf der Grundplatte 1.

Gemäss der Ausführungsform von Fig. 3 ist das Versteifungselement 5 als Längsstab 7 rechteckigen Querschnitts ausgebildet und mit Abstand neben einer Längsseite des integrierten Schaltkreises 4 angeordnet. Vergussmasse ist keine vorgesehen, so dass keine direkte mechanische Kopplung zwischen dem Längsstab 7 und dem integrierten Schaltkreis 4 besteht. Dieser ist natürlich quer zu seiner Längsachse am ehesten grösseren Biegelasten ausgesetzt. Der Schutz gegen derartige Belastungen wird durch ein zur Längsachse paralleles stabförmiges Versteifungselement am besten gewährleistet. Der Längsstab 7 ist etwas länger als der integrierte Schaltkreis 4 und ragt beidseits über ihn hinaus. Dies ist natürlich im Sinne eines möglichst wirksamen Schutzes von Vorteil, aber nicht in jedem Fall erforderlich. Der Abstand des Längsstabs 7 wird so gewählt, dass die Herstellung erschwerende enge Montagetoleranzen vermieden sind, aber der Längsstab 7 mit dem integrierten Schaltkreis 4 über die Grundplatte 1 mechanisch hinreichend stark gekoppelt ist, um seine Schutzfunktion zu erfüllen. Diese mechanische Kopplung über die Grundplatte kann dadurch hergestellt sein, dass sowohl der integrierte Schaltkreis 4 als auch das Versteifungselement 5 mit der Grundplatte 1 verklebt sind, wie das im Zusammenhang mit dem zweiten Ausführungsbeispiel geschildert wurde. Sie kann jedoch auch auf andere Weise, z. B. wie im ersten Ausführungsbeispiel dargestellt durch Klemmen dieser Teile zwischen der Grundplatte 1 und einer Deckplatte hergestellt sein. Wie gross der Abstand zwischen dem integrierten Schaltkreis 4 und dem Versteifungselement 5 jeweils sein darf, hängt stark von der Steifigkeit der Grundplatte 1 und der Stärke der mechanischen Kopplung ab.

Bei verhältnismässig geringer Biegesteifigkeit der Grundplatte 1 empfiehlt es sich (s. Fig. 4), ein zweistückiges Versteifungselement 5 aus zwei Längsstäben 7a,b vorzusehen, die mit Abstand neben den beiden Längsseiten des integrierten Schaltkreises 4 angeordnet sind. Die mechanische Kopplung kann (s. Fig. 5) durch einen Querstab 8 verstärkt werden, der mit Abstand neben einer Breitseite des integrierten Schaltkreises 4 angeordnet ist und an die beiden Längsstäbe 7a,b anstösst. Das Versteifungselement 5 kann in diesem Fall auch einstückig ausgeführt sein. Da es den integrierten Schaltkreis 4 an drei Seiten umgibt, ist es auch ohne grosse Schwierigkeiten möglich, den Zwischenraum zwischen demselben und dem Versteifungselement 5 wiederum mit Kleber 9 oder einer anderen Vergussmasse auszufüllen und so die mechanische Kopplung weiter zu verstärken.

Den wirksamsten Schutz bietet natürlich ein wie weiter oben beschrieben den integrierten Schaltkreis rahmenartig umgebendes Versteifungselement, insbesondere wenn es mit demselben auch noch direkt mechanisch gekoppelt ist, wie dies durch Vergiessen erreicht werden kann. Andererseits genügen u. U. die einfacher aufgebauten Versteifungselemente nach Fig. 3-5, die einfacher herstellbar und billiger sind. Das Versteifungselement kann auch durch Teile ergänzt sein, die ganz oder überwiegend anderen Funktionen dienen. Beispielsweise kann es einen dünnen Deckel umfassen, der den integrierten Schaltkreis etwa bei den abschliessenden Produktionsschritten schützt.

### Bezugszeichenliste

- 1: Grundplatte
- 2: Mittelplatte
- 3: Antennenschaltkreis
- 4: integrierter Schaltkreis
- 5: Versteifungselement
- 6: Deckplatte
- 6': Deckfolie
- 7, 7a,b: Längsstab
- 8, 8a,b: Querstab
- 9: Kleber

## Patentansprüche

1. Transponder mit einer Grundplatte (1) aus biegsamem Material, einem Antennenschaltkreis (3) und einem als rechteckiges Plättchen ausgebildeten integrierten Schaltkreis (4), **dadurch gekennzeichnet, dass** der integrierte Schaltkreis (4) auf der Grundplatte (1) angeordnet ist und ein Versteifungselement (5) zur Versteifung der Grundplatte (1) im den integrierten Schaltkreis (4) tragenden Bereich in der Nähe desselben ebenfalls auf der Grundplatte (1) angeordnet ist.

2. Transponder nach Anspruch 1, **dadurch gekennzeichnet, dass** das Versteifungselement (5) einen ersten Längsstab (7, 7a) umfasst, welcher an einer Längsseite des integrierten Schaltkreises (4) neben demselben angeordnet ist.

3. Transponder nach Anspruch 2, **dadurch gekennzeichnet, dass** das Versteifungselement (5) einen Querstab (8, 8a) umfasst, welcher an einer Breitseite des integrierten Schaltkreises (4) neben demselben angeordnet ist.

4. Transponder nach den Anspruch 2 oder 3, **dadurch gekennzeichnet, dass** das Versteifungselement (5) einen zweiten Längsstab (7b) umfasst, welcher an der dem ersten Längsstab (7a) gegenüberliegenden Seite neben dem integrierten Schaltkreis (4) angeordnet ist.

5. Transponder nach den Ansprüchen 3 und 4, **dadurch gekennzeichnet, dass** das Versteifungselement (5) einen den integrierten Schaltkreis (4) umgebenden Rahmen bildet.

6. Transponder nach einem der Ansprüche 1 bis 5, **dadurch gekennzeichnet, dass** das Versteifungselement (5) einstückig ist.

7. Transponder nach einem der Ansprüche 1 bis 6, **dadurch gekennzeichnet, dass** die Dicke des Versteifungselements (5) mit abnehmender Entfernung vom integrierten Schaltkreis (4) zunimmt.

8. Transponder nach einem der Ansprüche 1 bis 7, **dadurch gekennzeichnet, dass** das Versteifungselement (5) aus einem elektrisch nichtleitenden Material besteht, insbesondere aus vorzugsweise faserverstärktem Kunststoff oder Keramik.

9. Transponder nach einem der Ansprüche 1 bis 8, **dadurch gekennzeichnet, dass** das Versteifungselement (5) vom integrierten Schaltkreis (4) beabstandet und der Zwischenraum mit einer Vergussmasse, insbesondere einem Kleber (9) ausgefüllt ist.

10. Tranponder nach einem der Ansprüche 1 bis 9, **dadurch gekennzeichnet, dass** der integrierte Schaltkreis (4) mit dem Antennenschaltkreis (3) direkt elektrisch leitend verbunden ist.
